# EUROPEAN PATENT SPECIFICATION

(11) **EP 3 381 028 B1**
(45) Date of publication and mention of the grant of the patent: **02.09.2020**
(21) Application number: 16804892.4
(22) Date of filing: 28.11.2016
(51) Int. Cl.: G09F 13/20, C09K 11/77

(54) **PHOTOLUMINESCENT MARKERS**
PHOTOLUMINESZENTE MARKER
MARQUEURS PHOTOLUMINESCENTS

(30) Priority: 26.11.2015 GB 201520891
(43) Date of publication of application: 03.10.2018
(73) Proprietor: Saf-t-Glo Limited, Cwmbran, Wales NP44 3AB (GB)
(72) Inventor: O'KELL, Sean Patrick, Penarth South Glamorgan CF64 1NJ (GB); HALLETT, Andrew Jon, Cardiff South Glamorgan CF14 3NU (GB)
(74) Representative: Barker Brettell LLP
(86) International application number: PCT/GB2016/053735
(87) International publication number: WO 2017/089838

(56) References cited:
- US-A1- 2011 033 690
- US-A1- 2014 065 442
- US-A1- 2014 293 617

## Description

This invention relates to photoluminescent markers and in particular to photoluminescent markers arranged to emit a blue visible light.

In commercial aircraft, routes that lead from passenger seating to emergency exits are conventionally indicated by path markers provided on the floor of the aircraft cabin. The emergency exits can also be marked by exit sign markers. To allow for safe evacuation of the aircraft in an emergency, the markers must be visible in darkness.

The human eye detects light by means of photoreceptors in the eye. As will be described in more detail below the eye detects light by means of cone cells in bright light conditions. In dark conditions the human eye can become adapted to low light conditions and light is detected by means of rod cells in the eye. After a period of time in dark conditions the eye becomes adapted to the dark.

In order for a photoluminescent marker to be used as a safety marker system the system has to meet a number of requirements and it is necessary that the guidance material demonstrates compliance with CS/FAR 25 (Certification standards for large aircraft) when using photoluminescent materials for the emergency egress guidance systems. Typically a system may be tested by carrying out a naive evacuation in a worst case aircraft and system. The naive evacuation testing is generally accepted as substantiation for both single and twin aisle approvals. All photoluminescent material performance testing for further new approvals is then performed by comparison with the performance of the material used for the naive test. The materials used for the naive test can be used as a limit sample. The limit sample may use a "worst case" arrangement of materials and markers. Further materials can be approved if it can be shown that the performance characteristics are better than the limit sample and retesting is not required.

In tests of emergency evacuation systems there are two scenarios which are considered. In the first scenario an emergency is considered to occur on the runway during taxiing or take-off. In this scenario the human eye is considered to use cones for the detection of light. A second scenario is considered to be after a night flight when passengers have been sleeping in the dark. In such a circumstance the human eye is considered to be dark adapted. In both scenarios a cabin of the aircraft may be considered to have been filled with smoke.

For a long haul flight such a night flight is typically 12 hours. The test may assume that the flight has been 12 hours and that emergency guidance to the exits must be provided for some four further hours. In some circumstances the long haul flight may be up to 16 hours. On other routes and in other aircraft a night flight may be shorter.

For the naive evacuation the test may use the immediate luminance performance for the test for the first scenario. The photoluminescent material may be charged for a period of time at a specified lux, such as at 25lux for 45 minutes. The test for the first scenario may be carried out 1 hour after the charging has been completed. For the second scenario the naive evacuation test may be carried out 16 hours after charging has been completed.

Currently, markers use photoluminescent materials that emit green light (peak emission at approximately 520nm) in response to an excitation. National and international aviation standards provide minimum levels of duration and brightness of the emission after the excitation is removed (afterglow brightness and duration). It has been possible to provide an alternative daytime colour to the photoluminescent markers by the use of films and filters. However all systems have used a green emissive light.

US2011033690 discloses an afterglow coating comprising a clear varnish and a photoluminescent pigment wherein the pigment comprises a white luminous colour in which the clear varnish sis distributed. The invention furthermore relates to methods for producing the coating and to their use for coating surfaces in the cabin of aircraft.

US2014/0065442 discloses an object comprising a low rare earth mineral photoluminescent structure incorporated onto or into one or more portions of the object, the object being a photoluminescent object. Also discloses is a method for fabricating the object.

US2014/0293617 is the applicants earlier patent application and is directed to a photoluminescent guide for an emergency lighting system which includes a housing havein a first end, a second end opposite the first end and a longitudinal slot extending between the first end and the second end. A one-piece comprise insert includes a photoluminescent layer and a light-transmitting layer integrally secured to the photoluminescent layer. The one-piece composite insert is configured to receive light at the photoluminescent layer through the light-transmitting layer and to emit light from the photoluminescent layer through the light transmitting layer.

Aircraft in particular have rigid systems of safety features which specify a number of characteristics such as afterglow intensity; afterglow time frame, and afterglow perception.

It is an object of the invention to provide photoluminescent marker and marker system that provides improved perception of the emergency markers particularly by dark adapted eyes in the second scenario.

According to a first aspect of the invention, there is provided a marker for illuminating an area of an aircraft, the marker having all of the features of claim 1 of the appended claims.

The marker includes a photoluminescent material arranged to emit blue light in response to an excitation and wherein the photoluminescent material has an emission spectrum with a range of wavelengths having a maximum peak intensity between 400nm to 510nm.

The light emitted by the photoluminescent material may preferably be in the blue-violet end of the visible region of the electromagnetic spectrum.

The blue light may have an emission spectrum with a maximum peak intensity at wavelengths from 450 to 510nm.

In a preferred embodiment the maximum peak intensity may be from 485nm to 495nm or substantially at 490nm.

The excitation may be visible or non-visible light.

The photoluminescent material is arranged to emit blue visible light in response to excitation by electromagnetic waves having wavelengths from 250nm to 500nm. In one embodiment the photoluminescent material is arranged to emit blue visible light in response to excitation by electromagnetic waves having wavelengths from 250nm to 475nm. Optionally the range may be from 400nm to 500nm and in a preferred embodiment by wavelengths from 400nm to 470nm.

In some preferred embodiments the photoluminescent material emits in response to excitation by light in the blue to UV range. The photoluminescent material can be referred to as being "charged" by wavelengths in the UV range.

Typically a photoluminescent material absorbs energy from light in a particular range of wavelengths of the electromagnetic spectrum. The energy of the wavelengths excites electrons from ions in a lattice to a higher energy level. In a photoluminescent material the electrons typically may lose some energy to other ions in the lattice. The electrons may then move to a metastable state in which the electrons may remain for a period of time. Thermal energy absorbed from the lattice may after a period of time can cause the electrons to move from the metastable state to a ground state and to emit light at a wavelength longer than that of the excitation energy.

The marker may include a cover provided over at least a top surface of the photoluminescent material.

In other embodiments the cover may be at least partially transparent to the blue light emitted by the photoluminescent material. The cover may be at least partially transparent to the excitation required to stimulate the blue emission from the photoluminescent material.

The cover may be transparent to the blue light emitted by the photoluminescent material. The cover may be transparent to the excitation required to stimulate the blue emission.

In some embodiments the cover may partially block some UV wavelengths. In other embodiments the cover may be transparent to all wavelengths in the UV range.

The photoluminescent material may comprise one or more phosphorescent pigments.

The or each pigment may be formed from a plurality of chemical elements, the or each pigment having an element ratio defining the relative quantities of the plurality of elements in the or each pigment, the element ratio controlling the colour of visible light emitted by the or each pigment, wherein the element ratio is selected to provide blue emission.

The photoluminescent material may comprise a plurality of pigments, each pigment emitting a different colour of light in response to the excitation, such that the light emitted by the photoluminescent material comprises a mixture of colours forming an emission spectrum. Desirably the plurality of pigments is arranged such that the emission spectrum has a maximum peak intensity at wavelengths from 400 to 510 nanometres.

Preferably the pigment or mixture of pigments is selected such that the photoluminescent performance of the photoluminescent material meets a desired set of criteria as will be discussed in more detail below. It will be appreciated that a single pigment may be used. The skilled person will appreciate that one or more additional pigments may be added to the photoluminescent material in order to adjust an overall emission colour. A proportion of the mixture of pigments must be selected such that the overall performance meets the specified performance criteria. In an embodiment having a mixture of the pigments, desirably the main pigment and the mixture with the or each additional pigment has an emission spectrum with a maximum peak intensity at wavelengths from 400nm to 510nm. Desirably a ratio of pigments may be from 1:1 to 1:9 and optionally from 2:8 to 1:9. In some embodiments up to 50 wt % of the pigment may comprise the or each additional pigment.

In some embodiments Sr₄Al₁₄O₂₅: Eu²⁺,Dy³⁺ may be mixed with for example SrAl₂O₄: Eu²⁺,Dy³⁺. The proportion of Sr₄Al₁₄O₂₅: Eu²⁺,Dy³⁺ may be varied from 100 wt% to 50 wt%. In one embodiment the proportion of the Sr₄Al₁₄O₂₅: Eu²⁺,Dy³⁺ may comprise from 100 wt% to 80 wt% or in a preferred embodiment from 100wt% to 90 wt%. It will be appreciated that the ratio or wt% and the pigments used, particularly the additional pigment may be modified such that the overall light emitted has a peak at a wavelength greater that 510nm. It will be appreciated that the pigment may comprise minor amounts of impurities or some additives may be included to facilitate use of the pigment in the photoluminescent marker.

In the most preferred embodiment the pigment comprises 100% Sr₄Al₁₄O₂₅: Eu²⁺,Dy³⁺.

In a preferred embodiment the photoluminescent material comprises a main pigment and one or more additional pigments. The or each additional pigment may be a doped metal aluminate. The element ratio may define the ratio of metal: aluminium: oxygen.

In the or each pigment, the metal may be selected from a list comprising: strontium and calcium or any other alkali or alkaline earth metal. Preferably the metal comprises strontium. The or each pigment may comprise a further metal which may be selected from calcium or any other alkali or alkaline earth metal.

In the or each pigment, the doped metal aluminate may comprise a dopant selected from the list comprising: europium ions; dysprosium ions; and neodymium ions or any other rare earth (lanthanide) ions or a combination thereof. Preferably the dopant comprises europium ions and dysprosium ions. In some embodiments that dopant further comprises additional dopants and may further comprise neodymium ions.

In a preferred embodiment the photoluminescent material comprises a strontium aluminate pigment. Preferably the or each pigment comprises a strontium aluminate doped with at least Europium. In a preferred embodiment the or each pigment comprises a strontium aluminate doped with at least Dysprosium.

In a most preferred embodiment the or each pigment comprises a strontium aluminate doped with a combination of Europium and Dysprosium. The or each pigment may comprise a further dopant selected from neodymium or any other lanthanide ions.

The or each pigment may be selected from the group comprising: SrAl₄O_{7:}Eu²⁺Dy³⁺; SrAl₁₂O_{19:}Eu²⁺Dy³⁺; Sr2Al₆O_{11:}Eu²⁺Dy³⁺; Sr₄Al₂O_{7:}Eu²⁺Dy³⁺ and Sr₄Al₁₄O₂₅:EU²⁺,Dy³⁺.

In a particularly preferred embodiment the main pigment comprises Sr₄Al₁₄O₂₅:Eu²⁺Dy³⁺. In some embodiments the photoluminescent material comprises a main pigment containing Sr₄Al₁₄O₂₅:Eu²⁺,Dy³⁺ and at least one additional phosphorescent pigment. The or each additional pigment may emit light at a different range of wavelengths to the Sr₄Al₁₄O₂₅:Eu²⁺,Dy³⁺ pigment. The additional pigment may comprise a doped metal aluminate. The doped metal aluminate of the additional pigment may comprise a dopant selected from the list comprising: europium ions; dysprosium ions; and neodymium ions or any other rare earth (lanthanide) ions.

It has been appreciated that by manipulation of the components of the composition the maximum emission wavelength can be changed. Desirably the overall emission spectrum has a maximum emission wavelength from 400nm to 510nm.

Table 1 shows a range of pigments and the associated emission spectra. It has been found that the performance of the pigments may vary significantly.

### Emission of Eu²⁺ based strontium aluminate phosphors

**Table 1**

| **Material (Eu²⁺ doped)** | **Maximum emission wavelength (nm)** | **Colour** |
|---|---|---|
| SrAlO₄ | 528 | Blue-Green |
| SrAl₄O₇ | 480-490 | Blue |
| SrAl₁₂O₁₉ | 400-500 | Blue |
| Sr₂Al₆O₁₁ | 400-500 | Blue |
| Sr₃Al₂O₆ | 612 | Red |
| Sr₄Al₂O₇ | 350-700 | Blue-Red |
| Sr₄Al₁₄O₂₈ | 480 | Blue-Green |
| Sr₇Al₁₂O₂₈ | 410-460 | Violet-Green |

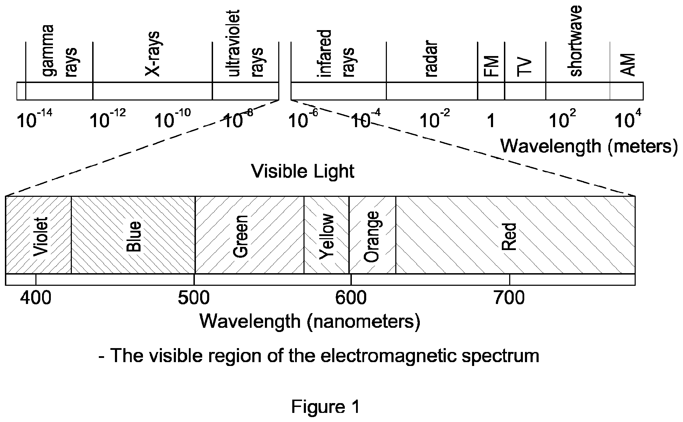

In the visible spectrum each individual wavelength is representative of a particular colour. Visible light is usually defined as that part of the electromagnetic spectrum having wavelengths in the range from 400 to 700 nanometres (nm) as illustrated in Figure 1 of the drawings.

The blue region of the electromagnetic spectrum is defined as approximately from 400 to 500nm and the green region as from 500 to 560nm.

Preferably the blue emitting photoluminescent material has a range of emission from 400 to 500nm. Preferably the blue emitting photoluminescent pigment has a maximum emission of about 490nm.

Preferably the photoluminescent material comprises a mixture of a main pigment comprising Sr₄Al₁₄O₂₅:Eu²⁺,Dy³⁺ and an additional pigment such as one of the pigments listed in Table 1 that may adjust the emission spectrum to a desired colour. The desired colour may adjusted by the use of additional pigments in order to achieve a particular emitted colour.

The human eye has been found to have three different vision regimes. It has been known that the human eye has three known types of photoreceptor cells in the eye. These are rods, cones and photosensitive retinal ganglion cells. During daylight with high ambient light levels vision is mediated by cones which are responsive to red, green and blue regions of the visible spectrum. This is known as photopic vision. Photopic vision applies at luminance level of greater than 3mcd/m².

In low light levels the vision is mediated by rods only. This is known as scotopic vision and applies to luminance levels of less than 0.3mcd/m². In scotopic vision it is known that the human eye does not perceive colour and objects are perceived as different tones of grey. Once the human eye has been dark adapted then vision relies solely on the signal from the rods. The rods are smaller than cones and are distributed across the retina. The rod cells are more than 100 times more sensitive than cones and are sensitive enough to respond to a single photon of light.

Mesopic vision relates to light levels between the photopic and scotopic vision regimes; that is: 0.003 cd/m² < mesopic luminance < 3 mcd/m².

It has been found that the human eye has a different eye sensitivity when dark adapted. In such conditions the sensitivity of the human eye is determined by DIN 67510. Safety requirements specify that the luminance of a photoluminescent system must be at least 0.3 mcd/m² which is 100 times the threshold detection limit of the dark adapted human eye. Desirably the luminance has an emissivity intensity of at least 0.3mcd/m² after being fully charged or preferably the emissivity intensity is at least 0.3mcd/m² 2 hours after charging has ceased, or more preferably 0.3mcd/m² after charging has ceased or more preferably 0.3mcd/m² 4 hours after cessation of charging. In the more preferred embodiments the emissivity intensity is at least 0.3mcd/m² 6 or 8 hours after cessation of charging. It is desirable that the emissivity intensity is 0.3mcd/m² or more after 12 hours or in the most preferred embodiment the emissivity intensity is 0.3mcd/m² 16 hours after cessation of charging. In some embodiments the emissivity may be 30mcd/m² 12 hours, or more preferably 16 hours, after cessation of charging at 25 lux for 45 mins.

In a preferred embodiment the emissivity intensity, 10 minute after charging is terminated, is at least 50mcd/m² or more preferably at least 150mcd/m² or most preferably at least 300 mcd/m². In a most preferably embodiment the emissivity intensity is greater than 380mcd/m².

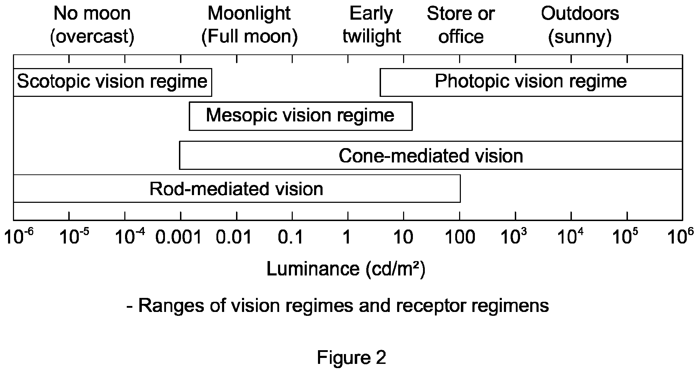

Each form of cells are sensitive to different wavelengths as can be seen in Figure 2.

It has been found that scotopic vision has a maximum sensitivity to emitted light that overlies both green and blue emitted photoluminescence and that the greatest sensitivity coincides with blue emitted light.

It has also been found that a size distribution of the particles of pigment of the pigment must be carefully selected in order to achieve the specified performance criteria.

One important performance criteria is described as luminance and refers to the light emitted by the photoluminescent material after charging. Desirably the luminance at 10 mins after charging has ceased should achieve at least 50mcd/m², or more preferably at least 150mcd/m², or most preferably at least 300 mcd/m² (DIN67510). In a most preferable embodiment the emissivity intensity is greater than 380mcd/m² for at least one hour after charging has ceased. It has been found that if the particles are too big then the luminance will not meet the required level.

Another important performance criteria is an afterglow. After glow is an indication of the period of time in which a detectable luminance is produced. If pigment particles are too small then the afterglow time will not be sufficient to provide the necessary luminance for the pigment to be suitable for emergency egress after a night flight.

Preferably the particle size distribution is from 1 micron to 200 microns and preferably from 5 microns to 100 microns and most preferably from 5 microns to 90 microns. Desirably the particle size distribution is a range of sizes within the preferred ranges.

According to a second aspect of the invention, there is provided a marker system for illuminating areas of an aircraft, the system including a plurality of markers according to the first aspect of the invention.

The system may include a group of first markers.

The first markers may be emergency markers for highlighting locations and/or routes to emergency exits of an aircraft.

Until the present invention it has not been possible to provide a blue photoluminescent pigment that can be used in a system that meets the safety requirements for aircraft.

As discussed above all photoluminescent systems have to meet test requirements in two scenarios.

The first scenario is immediate evacuation on a runway during taxiing or take-off. It is understood that in these conditions the human eye is not dark adapted and the light detection in the eye is by photopic vision. It is has been found that the luminance of a marker system in accordance with the invention is less than the luminance of the green emitting photoluminescent material. However it has been found that the luminance of a marker system in accordance with the claimed invention is greater than the required level.

The second scenario was tested for evacuation after a period of dark in order to simulate conditions on an overnight flight. The period of dark may be greater than 2 hours or preferably greater than 4 hours or may be greater than 12 hours such as an overnight flight. In such conditions human eye is assumed to be dark adapted and utilising scotopic vision. The photoluminescent material is assumed not to be fully charged as the cabin will have been dark for a period of time.

In addition the luminance must be greater than the previous worst case system as tested by naive evacuation in order to be approved.

Preferably the blue emitting photoluminescent material has a range of emission wavelengths from 400-500nm. More preferably the blue emitting photoluminescent pigment has a maximum emission substantially at 490nm. Under scotopic vision conditions the human eye has maximum sensitivity at around 498nm. The photoluminescent material is arranged to emit at a wavelength close to that of maximum sensitivity of scotopic vision.

The modern day interpretation of the human eye sensitivity under scotopic vision showed that rods are most sensitive to wavelengths of light around 498nm (green-blue) and are insensitive to wavelengths longer than about 640nm (red).

Desirably the markers further comprise a colour modifier. In some embodiments the colour modifier comprises a coloured film. Preferably the colour film has a transmission spectrum that allows blue light to be transmitted. It will be appreciated that if the colour film does not transmit blue light then no light will be transmitted from the marker.

In aircraft cabins it has been commonly been desired that marker systems are arranged to blend in with carpeting and cabin colouring. A preferred colouring in aircraft cabins is blue.

Typically a base colour of the photoluminescent material has pale yellow colour. Photoluminescent material having a green emissivity typically has a pale yellow colour. Conventionally the base pigment is combined with coloured films to provide an aesthetically pleasing colour in use in a marker system in aircraft cabins. This may be desirable for providing suitable colours matching cabin decor during daylight hours.

In other embodiments the colour modifier may be a coloured housing. The housing may include a pigment. The housing may comprise an extrusion of coloured material. The extrusion may be at least partially coloured.

It has been found that the films used for marker systems that are arranged to be provide blue markers allow more blue wavelength light to be transmitted than green wavelength photoluminescent emissions. Accordingly it has been found that strength of emission performance of existing coloured films improves with blue light photoluminescent pigment compared to the strength of emission of green light photoluminescent pigment.

It has been found in tests that a system of photoluminescent markers comprising pigment in accordance with the first aspect of the invention has an improved emissivity and that the light emitted overlaps with the maximum sensitivity of scotopic vision of the human eye such that the final perception is 22.2% greater for blue emitting photoluminescent pigment with a standard blue film than a marker with the same blue film and with green emitting photo-luminescent pigments.

It will be appreciated that the blue emitting pigment is selected to have an improved luminance after 1 hour and after a longer period of time simulating an overnight flight. In combination in the marker system that the colour modifier is selected to allow light emitted by the blue pigment to pass through the housing. The pigment is selected to have a maximum emissivity that overlaps with a maximum sensitivity of scotopic vision.

It has been found that the perception if light emitted from the markers is as noted above 22.2% greater than perceived light from markers with green luminescent material when calculated using the area under the spectrum and scaled by the sensitivity of scotopic vision.

According to a third aspect of the invention, there is provided an aircraft including a passenger cabin; and a marker system according to the second aspect.

It is also disclosed but not claimed that photoluminescent markers of differing colour may be provided for differentiating between different areas or functions in an aircraft such as differentiating between different emergency functions or differentiating between emergency and non-emergency functions or differentiating between first class and/or business class and economy class sections in an aircraft.

In some embodiments aircraft can also include non-emergency markers, such as seat markers or floor markers, and the like. Non-emergency floor markers may differentiate between first class and/or business class and economy class sections or other areas of the aircraft. It is also desirable for these to be visible in low light condition.

Embodiments of the invention will now be described by way of example only, with reference to the drawings, in which:
**Figure 1** illustrates the electromagnetic spectrum;
**Figure 2** illustrates the ranges of vision regimes and receptor regimes in the human eye;
**Figure 3** illustrates the receptor sensitivities in the human eye;
**Figure 4** illustrates absorption spectra of human eye rods overlaid with emission profile of blue and green emitting photoluminescent material overlaid with dark blue film;
**Figure 5** illustrates a schematic example of a marker in plan view;
**Figure 6** illustrates a cross-section through the marker of Figure 5;
**Figure 7A** illustrates the excitation and emission curves for a first example photoluminescent pigment;
**Figure 7B** illustrates the excitation and emission curves for a second example photoluminescent pigment, Sr₄Al₁₄O₂₅: Eu²⁺,Dy³⁺;
**Figure 7C** illustrates the excitation and emission curves for a third example photoluminescent pigment;
**Figure 8** illustrates the excitation curve for a marker including a fourth example photoluminescent material;
**Figure 9** illustrates a schematic example of a cabin of an aircraft, incorporating an emergency exit marking system; and

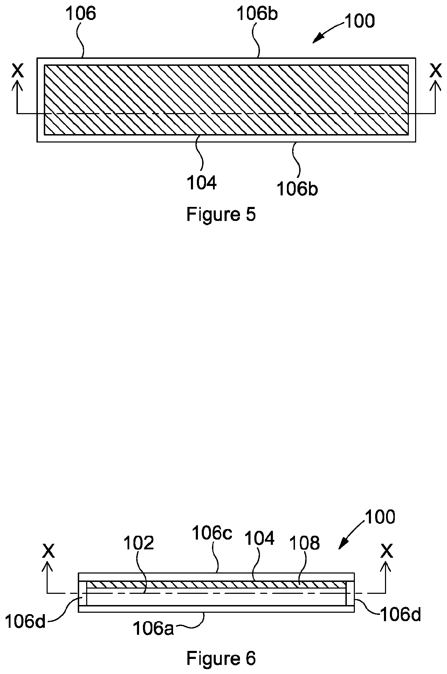

Figures 5 and 6 show a schematic example of a marker 100 in accordance with the invention. The marker 100 shown in Figure 5 and 6 is a simple rectangular marker 100, shown for illustrative purposes only. As will be discussed in further detail below, the marker may have any suitable shape or configuration.

The marker 100 shown in Figures 5 and 6 comprises a housing 106, of rectangular cross section with a bottom wall 106a, side walls 106b and a top wall 106c. The housing 106 can be formed by any suitable method, and is made of a light transmitting material. A photoluminescent insert 108 is received in the housing 106, and extends from one end of the housing 106 to the other. The housing 106 is closed by end caps 106d or sealant. The photoluminescent insert 108 is a push fit inside the housing 106, and includes a substrate 102, and a region of photoluminescent material 104 covering the surface of the substrate 102 that faces up in use. The photoluminescent material 104 exhibits persistent luminescence (phosphorescence).

In other embodiments (not shown), a marker may comprise at least one photoluminescent layer and at least one protective layer covering the photoluminescent layer where the photoluminescent layer comprises photoluminescent material and the protective layer comprises a light transmitting material. Such a marker may be used as a seat marker or an exit marker. The marker may also comprise colour filters as part of the housing or provided as a film within the housing.

A photoluminescent material is a material that emits radiation in response to an excitation, for example irradiation by a light source (visible or not visible). The light source may be providing UV light. A material exhibiting persistent luminescence emits radiation for a sustained period of time in response to excitation. This means that even if the excitation is removed, the marker will continue to emit visible light. Therefore, if the cabin 200 becomes dark (either the lights are switched off for passenger comfort, the lights lose power in an emergency, or the cabin is filled with smoke), the marker 100 is still visible.

The region of photoluminescent material 104 in the marker 100 of Figure 5 and 6 includes one or more phosphorescent pigments, the main pigment is Sr₄Al₁₄O₂₅:Eu²⁺,Dy³⁺ and optionally at least one additional pigment. The additional pigments used are doped metal aluminates, of the form MₓAl_{y}O_{z}:D1²⁺,D2³⁺, where M is a metal, D1 and D2 are dopants, and x:y:z the ratio of the metal, aluminium and oxygen in the pigment, also referred to as the stoichiometry of the pigment. The Sr₄Al₁₄O₂₅:Eu²⁺,Dy³⁺ has a spectrum of emissivity with a maximum peak of emissivity at about 490nm.

The photoluminescent material may further comprise an additional pigment. The additional pigment also comprises a doped metal aluminate. The metal may be, for example, Strontium, Calcium or any alkali or alkaline earth metal. The dopant may be, for example, Europium ions, Dysprosium ions, Neodynium ions, or rare earth (lanthanide) ions. In a particular embodiment the dopant is Europium ions and Dysprosium ions. The dopant is typically less than 1% by weight of the composition. In a preferred composition the main pigment comprises Sr₄Al₁₄O₂₅:Eu²⁺,Dy³⁺. The additional pigment is one of SrAlO₄ or SrAl₄O₇. An additional pigment could alternatively be CaAlO₄:Eu,Nd.

The colour of light emitted by a pigment is controlled by the stoichiometry. Therefore, the colour of the region of photoluminescent material 104 can be controlled by using either a single pigment of a chosen colour, or a mixture of pigments of different colours. This can be used to a generate range of emitted colours. It is important that the wavelength of the emitted light are in the range from 400nm to 510nm but desirably in the range 485nm to 495nm.

Table 2 show examples of pigments that can be used in the region of photoluminescent material 104 of the marker 100 in Figures 5 and 6. The emission from the pigment is typically a spectrum of light. Table 2 shows the maximum of the emission spectrum from a pigment (for example PI), although the emission of some pigments (for example P3) is reported over a range of wavelengths.

**Table 2: Example pigments.**

| | **Material** | **Emission** | **Colour** |
|---|---|---|---|
| P1 | SrAl₂O₄: Eu²⁺,Dy³⁺ | 520nm | Green |
| P2 | SrAl₄O₇: Eu²⁺,Dy³ | 480nm | Blue |
| P3 | SrAl₁₂O₁₉: Eu²⁺,Dy³ | 400-500nm | Blue |
| P4 | Sr₂Al₆O₁₁: Eu²⁺,Dy³ | 400-500nm | Blue |
| P5 | Sr₃Al₂O₆: Eu²⁺,Dy³ | 612 | Red |
| P6 | Sr₄Al₂O₇: Eu²⁺,Dy³ | 350-700nm | Blue-red |
| P7 | Sr₄Al₁₄O₂₅: Eu²⁺,Dy³⁺ | 490nm | Blue-green |
| P8 | Sr₇Al₁₂O₂₅: Eu²⁺,Dy³ | 410-460nm | Violet-green |
| P9 | CaAl₂O₄: Eu²⁺,Nd³⁺ | 440nm | Violet |

Table 3 shows examples of mixtures of pigments that can be used in the region of photoluminescent material 104 of the marker 100 in Figures 5 and 6. The constituent pigments are taken from Table 2.

**Table 3: Example mixtures.**

| | **Mixture** | **Ratio** | **Colour** |
|---|---|---|---|
| M1 | P1 and P7 | 1:9 | Cyan |
| M2 | P1 and P7 | 2:8 | Cyan |

Other mixtures may be used: P1 and P2; P1 and P9. It is possible to use a number of mixtures and ratios such that the light emitted does not have a wavelength greater that 510nm.

In a one embodiment the ratio of SrAl₂O₄: Eu²⁺,Dy³⁺ : Sr₄Al₁₄O₂₅: Eu²⁺,Dy³⁺ is 1:1. In a more preferred embodiment the pigments may be comprise between 1:1 and 99:1 Sr₄Al₁₄O₂₅: Eu²⁺,Dy³⁺: Dy³⁺ : SrAl₂O₄: Eu²⁺,Dy³⁺. In the most preferred embodiment the pigment comprises 100% SrₐAl₁₄O₂₅:Eu²⁺,Dy³⁺. It will be appreciated that the pigment may comprise minor amounts of impurities or contaminants.

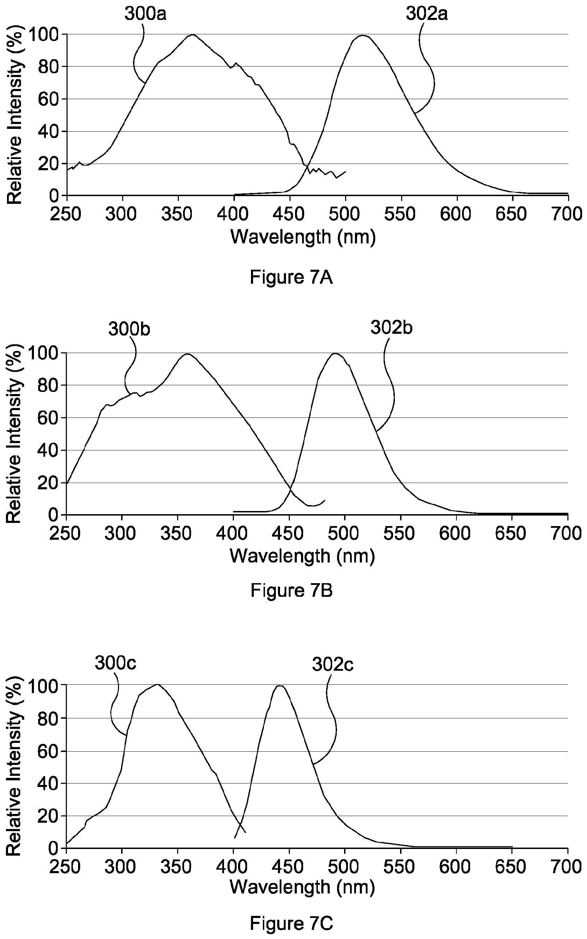

Figure 7A shows the excitation spectra (also known as the charging profile) of pigment P1 as line 300a and the emission spectra of pigment P1 as line 302a, as an example. The P1 excitation spectra 300a shows the wavelengths of light required to excite pigment P1 to emit. The P1 emission spectra, 302a shows the spectrum of light emitted by the pigment. The difference in the wave length between the excitation wavelength and the emitted wavelength is known as the Stokes shift.

Similarly, Figure 7B shows the excitation spectra of pigment P7 300b, and the emission spectra of pigment P7 302b as another example. P7 is Sr₄Al₁₄O₂₅:Eu,Dy. Figure 7C shows the excitation spectra of pigment P9 300c, and the emission spectra of pigment P9 302c, as a further example.

The P9 charging profile 300c is largely in the ultraviolet (UV) region of the electromagnetic spectrum (wavelength of 100nm to 400nm), with no excitation above 400nm. Both P1 and P7 also have the majority of the charging profile 300a, 300b in the UV region too, with some of the profile above 400nm. In some embodiments it can be desirable to arrange for the photoluminescent material to be charged by UV radiation. It can be advantageous as UV radiation can be emitted without disturbing sleeping passengers on an overnight flight. Blue light may also be used for charging the photoluminescent material. Blue light may be used to illuminate the cabin particularly during night flights.

A charging profile of Sr₄Al₁₄O₂₅:Eu,Dy is provided in Figure 7B.

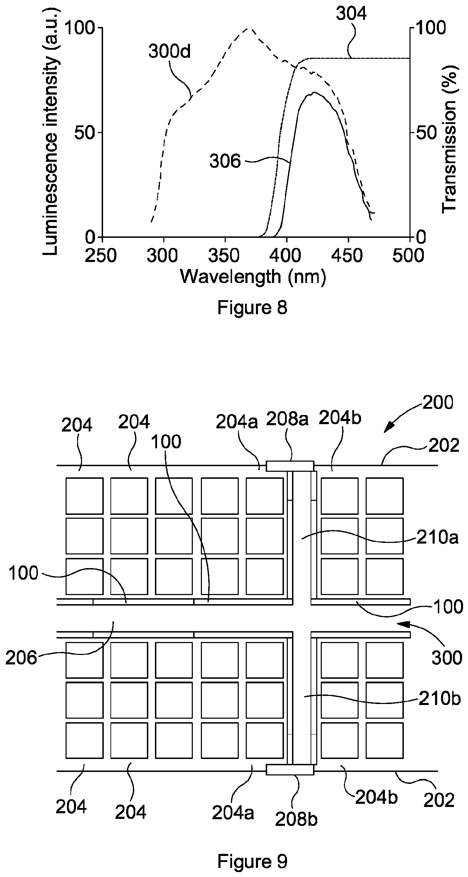

The housing 106 and pigment (or mixture of pigments) should be selected so that the housing 106 is transparent to at least a portion of the charging profile 300, and the transmission profile 302. Figure 8 shows an example of the charging profile 300d for a mixture of pigments that emits blue light. In this example, the majority of the charging profile 300d is again in the UV, with some charging above 400nm.

Figure 8 also shows an example transmission curve 304 for the housing 106. The housing 106 allows transmission of light starting at approximately 390nm and above, and blocks light below this. The charging curve 300d for the mixture of pigments, is modified by the transmission curve 304, to give a marker charging curve 306. This is the wavelengths of light required to excite the marker to emit light. This is different to the charging curve for the mixture 300d because of the transmission of the housing 106.

A housing 106 with a different transmission curve would be required for pigments with different charging curves (for example P9), to ensure that the blue emission is excited.

The emission colour of the marker 100 can be controlled by selecting the pigment or mixture of pigments used in the region of photoluminescent material 104. For example, the marker 100 can be made non-green by using a single non-green pigment on its own (see Table 2). Alternatively, a mixture of pigments from Table 2 can be used, with the final appearance of the mixture being blue (see Table 3). Although the final appearance of the mixture of pigments may be blue, the mixture may include a pigment that emits green light.

The advantages of the invention are achieved by selecting a number of pigments that have an overall blue emission and that have an emission intensity characteristic that is from preferably from 485 to 495 nm and is centred on 490nm. In some cases the overall emission may be adjusted such that the range is from 480nm to 500nm.

In the above, emission is considered to be green if it has a peak between 510nm and 530nm, and non-green if its peak is outside this range.

DIN65710 requires that the intensity emissivity has to be greater than 0.3mcd/m² for photoluminescent materials which is 100 times the human eye sensitivity.

The marker 100 may be used in many different ways, and the colour of the marker 100 may be changed for the different scenarios. The marker 100 can also include a design. The design may be wording, symbols, logos or the like. The marker can also be made any shape.

The design can be formed by changing the shape of the region of photoluminescent material 104. In addition, or alternatively, the housing 106 or protective layer(s) may be constructed to provide the pattern, by only allowing transmission of the excitation light and/or the emitted light in certain regions. This may be by means of a coating or cover layer provided on the housing 106 or protective layer(s), or making the housing 106 or protective layer(s) of regions of different material.

In one example, markers 100 may be used in an emergency exit marking system 300, as shown in Figure 9. In this case, the pigment, or mixture of pigments are chosen to have a sufficient excitation profile between 400nm and 500nm for charging and to provide a blue emission from UV to blue visible light. The wavelengths from 400nm to 500nm of light are available in dark or low light environments in an aircraft in order to charge the pigments. The pigment and transmission curve of the housing are also chosen to ensure blue light is emitted. For example, the light may be emitted at 490nm. The housing is arranged to be transparent or partially transparent to light emitted by the pigment in the marker.

For emergency exit marking national and international aviation standards provide standards of duration and brightness of the emission after the excitation is removed (afterglow brightness and duration), such that all passengers have time to safely exit the aircraft in an emergency as may be evidenced by naive evacuation examples. The marker 100 must also be visible in the dark.

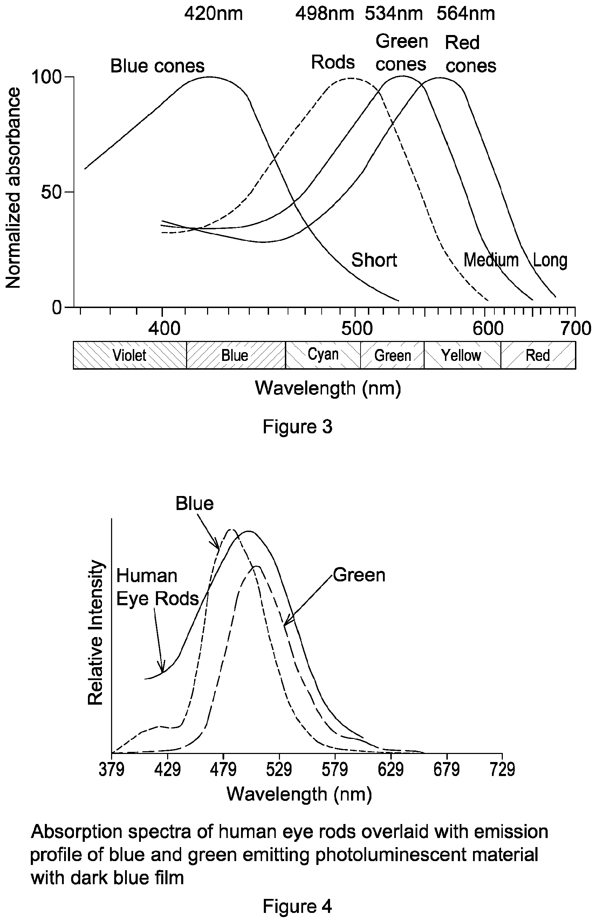

Figure 4 shows the response of the human eye to light, under low light and dark conditions. As has been discussed the human eye after a period of time in dark conditions can utilise scotopic vision in which the eye uses rod cells to detect light. In these scotopic conditions, the eye is most responsive at 498nm. For an emergency exit system 300, the markers and pigments should be selected to emit light that the human eye is responsive to when dark adapted. (i.e. using Scotopic vision)

Figure 9 shows a schematic example of a section of a passenger cabin 200 of an aircraft, formed between fuselage walls 202. The cabin 200 includes rows of seating 204, arranged with an aisle 206 through the rows 204. Emergency exits 208a, 208b are provided in the fuselage walls 202. Access paths 210a, 210b are provided between a first row of seats 204a and a second row of seats 204b, to allow access to the emergency exits 208a, 208b, from the aisle 206.

Markers 100 are formed as elongate track sections 100. The track sections 100 are laid end to end (and around corners) to form tracks, each of several sections 100 length. The tracks are provided on the floor of the aisle 206 and access paths 210a, 210b, to direct passengers from their seat to the nearest emergency exit 208a, 208b.

Markers 100 may also be formed into signs to mark the locations of the emergency exits 208 either above the exit or at low level. The markers 100 may also provide emergency marking of seats, footrests, monuments and other fixtures or fittings in the aircraft.

In some examples, the marker 100 may also be used to provide daylight colours. The mixtures of pigments may be used to provide whiter daylight colours than currently available. The daylight colour refers to the appearance of the marker in daylight.

In some examples, the marker 100 may include two different pigments or mixtures of pigments - a first pigment or mixture that emits a first wavelength of light in response to UV light excitation, and a second pigment or mixture that emits a second wavelength of light in response to daylight excitation. In this way, the marker 100 can be made to have a different appearance in light conditions compared to no light or dark conditions.

In some examples, the housing 106 may form a protective layer or top cover. For example, the protective layer may prevent damage from passengers walking on the marker 100. In other examples, a separate protective layer may be provided. The protective layer and/or housing may be used to provide a matt or gloss finish to the marker 100. In other examples a colour modifier in the form of a colour filter may be used. This may be applied to the protective layer or top cover or may form part of the marker. In some embodiments the marker comprises a housing in which the photoluminescent material is provided. The housing may comprise a colour modifier in the housing. The colour modifier can be a colouring in the housing.

The above pigments are given by way of example only, and other types of aluminate and non-aluminate based phosphorescent materials will be apparent to the person skilled in the art that can be mixed to provide a photoluminescent material having an emission spectra in the range 400-5 10nm.

It will be appreciated that the structure shown in Figures 5 and 6 is by way of example only. Any suitable construction may be used to provide a photoluminescent marker 100, and many different possible constructions will be apparent to the person skilled in the art. For example, only the top part of the housing 106c may be formed of the transparent material.

It will also be appreciated that the cabin shown in Figure 9 is also by way of example only, and the floorpath system may be used with any suitable passenger cabin arrangement.

It will be appreciated that the markers could also be used in any type of vehicle, such as a bus or boat, and could also be used in buildings. It will be appreciated that the markers are particularly suited to use in aircraft.

## Claims

1. A marker for illuminating an area of an aircraft, the marker comprising a housing and photoluminescent material exhibiting persistent luminescence and arranged to emit blue visible light in response to an excitation by electromagnetic radiation having wavelengths from 250nm to 500nm and wherein the photoluminescent material has an emission spectrum with a maximum peak intensity between 400nm and 510nm.

2. The marker of claim 1 wherein the photoluminescent material is arranged to emit blue visible light, in response to excitation by light of wavelength between 400nm and 500nm and wherein the photoluminescent material has a performance characteristic such that the emissivity is at least 0.3 mcd/m² 12 hours after cessation of charging at 25 lux for 45 mins.

3. A marker for illuminating an area of an aircraft according to claim 1 where the photoluminescent material has a performance characteristic such that the emissivity is at least 0.3 mcd/m² 16 hours after cessation of charging at 25 lux for 45 mins and optionally at least 0.30mcd/m² after 12 hours, or more preferably after 16 hours, after cessation of charging at 25 lux for 45 mins.

4. A marker according to claim 3 wherein the emissivity intensity, 10 minutes after charging is terminated, is at least 50mcd/m² or more preferably at least 150mcd/m² or most preferably at least 300mcd/m² according to DIN67510.

5. A marker in accordance with any preceding claim wherein the housing comprises a cover over at least a top surface of the photoluminescent material and wherein the cover is at least partially transparent to the blue light emitted by the photoluminescent material and wherein the photoluminescent material comprises a pigment containing a Europium and Dysprosium doped strontium aluminate optionally with the formula Sr₄Al₁₄O₂₅:Eu,Dy. and optionally one or more further phosphorescent pigments wherein optionally at least one of
i) the or each further pigments is a doped metal aluminate;
ii) wherein the doped metal aluminate comprises a dopant selected from the list comprising: europium ions; dysprosium ions; and neodymium ions or any other rare earth (lanthanide) ions;
iii) wherein the photoluminescent material comprises a mixture of the main pigment and a pigment comprising at least one of SrAl₄O₇:Eu,Dy or CaAl₂O₄:Eu,Nd; and SrAl₂O₄:Eu,Dy;
iv) wherein the pigment comprises from 50wt% to 100wt% of Sr₄Al₁₄O₂₅:Eu,Dy.

6. The marker of any preceding claim wherein the photoluminescent material is excited by visible or non-visible light.

7. A marker according to any preceding claim wherein the photoluminescent material has an emission spectrum with a maximum peak intensity between 485nm to 495nm and optionally substantially at 490nm.

8. The marker of any preceding claim wherein the pigment comprises particles of pigment having a range of sizes and wherein the particles are from 1 to 200 microns in size and optionally the particles range from 5 to 90 microns.

9. The marker of any preceding claim further including a cover provided over at least a top surface of the photoluminescent material and optionally a coloured filter and preferably the cover is at least partially transparent to the blue light emitted by the photoluminescent material and optionally wherein the cover is at least partially transparent to the excitation required to stimulate the blue emission.

10. The marker of claim 9 wherein the photoluminescent material comprises a plurality of pigments, each pigment emitting a different colour of light in response to the excitation, such that the light emitted by the photoluminescent material comprises a mixture of colours forming an emission spectrum having a range from 400nm to 510nm.

11. A marker system for illuminating areas of an aircraft, the system including a plurality of markers according to any of claims 1-10 wherein preferably the system includes markers including a photoluminescent material arranged to emit blue visible light in response to an excitation.

12. The system of claim 11, wherein the system includes a group of first markers optionally comprising emergency markers highlighting locations and/or routes to one or more emergency exits of an aircraft.

13. The system of claim 12 wherein the system includes a group of second markers which comprise seat markers.

14. The system of claims 11 to 13 wherein the system is arranged to provide an emergency evacuation guide and wherein at least the first markers are formed as elongate track sections and wherein the tracks are can be secured to a floor a floor of an aircraft cabin to direct passengers from their seat to the nearest emergency exit.

15. An aircraft including a passenger cabin; and a marker system according to any of claims 11-14.

## Patentansprüche

1. Marker zum Beleuchten eines Bereichs eines Flugzeugs, wobei der Marker ein Gehäuse und Photolumineszenzmaterial umfasst, das persistente Lumineszenz zeigt und vorgesehen ist, um in Reaktion auf eine Anregung durch elektromagnetische Strahlung mit Wellenlängen von 250 nm bis 500 nm blaues sichtbares Licht zu emittieren, und wobei das Photolumineszenzmaterial ein Emissionsspektrum mit einer maximalen Peakintensität zwischen 400 nm und 510 nm aufweist.

2. Marker nach Anspruch 1, wobei das Photolumineszenzmaterial vorgesehen ist, um in Reaktion auf Anregung durch Licht mit einer Wellenlänge zwischen 400 nm und 500 nm blaues sichtbares Licht zu emittieren, und wobei das Photolumineszenzmaterial ein Leistungscharakteristikum aufweist, so dass die Emissivität 12 Stunden nach Beenden des Ladens mit 25 Lux für 45 Minuten mindestens 0,3 mcd/m² beträgt.

3. Marker zum Beleuchten eines Bereichs eines Flugzeugs nach Anspruch 1, wobei das Photolumineszenzmaterial ein Leistungscharakteristikum aufweist, so dass die Emissivität 16 Stunden nach Beendigung des Ladens mit 25 Lux für 45 Minuten mindestens 0,3 mcd/m² und gegebenenfalls nach 12 Stunden oder bevorzugter 16 Stunden nach Beendigung des Ladens mit 25 Lux für 45 Minuten mindestens 0,30 mcd/m² beträgt.

4. Marker nach Anspruch 3, wobei die Intensität der Emissivität 10 Minuten, nachdem mit dem Laden aufgehört worden ist, mindestens 50 mcd/m² oder bevorzugter mindestens 150 mcd/m² oder am meisten bevorzugt mindestens 300 mcd/m² gemäß DIN 67510 beträgt.

5. Marker nach einem der vorhergehenden Ansprüche, wobei das Gehäuse eine Abdeckung über mindestens einer Deckfläche des Photolumineszenzmaterials umfasst, und wobei die Abdeckung mindestens teilweise transparent für das durch das Photolumineszenzmaterial emittierte blaue Licht ist, und wobei das Photolumineszenzmaterial ein Pigment umfasst, das ein mit Europium und Dysprosium dotiertes Strontiumaluminat, das gegebenenfalls die Formel Sr₄A1₁₄O₂₅:Eu,Dy aufweist, und gegebenenfalls ein oder mehrere weitere phosphoreszierende Pigmente umfasst, wobei gegebenenfalls mindestens eins von
i) dem oder jedem weiteren Pigment ein dotiertes Metallaluminat ist;
ii) wobei das dotierte Metallaluminat ein Dotiermittel ausgewählt aus der Liste umfasst, die Europiumionen; Dysprosiumionen und Neodymionen oder jegliche anderen Seltenerd- (Lanthanid)ionen umfasst;
iii) wobei das Photolumineszenzmaterial eine Mischung aus dem Hauptpigment und einem Pigment umfasst, das mindestens eins von SrAl₄O₇:Eu, Dy oder CaAl₂O₄:Eu,Nd; und SrAl₂O₄:Eu,Dy umfasst;
iv) wobei das Pigment 50 Gew.% bis 100 Gew.% Sr₄Al₁₄O₂₅:Eu,Dy umfasst.

6. Marker nach einem der vorhergehenden Ansprüche, wobei das Photolumineszenzmaterial durch sichtbares oder nicht-sichtbares Licht angeregt wird.

7. Marker nach einem der vorhergehenden Ansprüche, wobei das Photolumineszenzmaterial ein Emissionsspektrum mit einer maximalen Peakintensität zwischen 485 nm und 495 nm und gegebenenfalls im Wesentlichen bei 490 nm aufweist.

8. Marker nach einem der vorhergehenden Ansprüche, wobei das Pigment Pigmentpartikel mit einem Bereich von Größen umfasst, und wobei die Partikel 1 bis 200 Mikrometer groß sind und die Partikel gegebenenfalls im Bereich von 5 bis 90 Mikrometern liegen.

9. Marker nach einem der vorhergehenden Ansprüche, des Weiteren einschließend eine Abdeckung, die über mindestens einer Deckfläche des Photolumineszenzmaterials bereitgestellt ist, und gegebenenfalls ein Farbfilter, und wobei die Abdeckung mindestens teilweise für das durch das Photolumineszenzmaterial emittierte blaue Licht transparent ist, und wobei gegebenenfalls die Abdeckung für die Anregung mindestens teilweise transparent ist, die zum Stimulieren der blauen Emission erforderlich ist.

10. Marker nach Anspruch 9, wobei das Photolumineszenzmaterial eine Vielzahl von Pigmenten umfasst, wobei jedes Pigment eine andere Lichtfarbe in Reaktion auf die Anregung emittiert, so dass das von dem Photolumineszenzmaterial emittierte Licht eine Mischung von Farben umfasst, die ein Emissionsspektrum mit einem Bereich von 400 nm bis 510 nm bilden.

11. Markersystem zum Beleuchten von Bereichen eines Flugzeugs, wobei das System eine Vielzahl von Markern nach einem der Ansprüche 1 bis 10 einschließt, wobei das System vorzugsweise Marker einschließt, die ein Photolumineszenzmaterial einschließen, das zum Emittieren von blauem sichtbaren Licht in Reaktion auf eine Anregung vorgesehen ist.

12. System nach Anspruch 11, wobei das System eine Gruppe von ersten Markern einschließt, die gegebenenfalls Notfallmarker umfassen, die Positionen und/oder Wege zu einem oder mehreren Notausgängen eines Flugzeugs hervorheben.

13. System nach Anspruch 12, wobei das System eine Gruppe von zweiten Markern einschließt, die Sitzmarker umfassen.

14. System nach den Ansprüchen 11 bis 13, wobei das System vorgesehen ist, um eine Notevakuierungsführung bereitzustellen, und wobei mindestens die ersten Marker als längliche Führungsbahnabschnitte gebildet sind, und wobei die Führungsbahnen an einem Boden einer Flugzeugkabine angebracht werden können, um Passagiere von ihrem Sitz zu dem nächsten Notausgang zu lenken.

15. Flugzeug, das eine Passagierkabine und ein Markersystem nach einem der Ansprüche 11 bis 14 einschließt.

## Revendications

1. Marqueur pour éclairer une zone d'un aéronef, le marqueur comprenant un boîtier et un matériau photoluminescent présentant une luminescence persistante et agencé pour émettre une lumière visible bleue en réponse à une excitation par un rayonnement électromagnétique ayant des longueurs d'onde de 250 nm à 500 nm et le matériau photoluminescent ayant un spectre d'émission avec une intensité de crête maximale entre 400 nm et 510 nm.

2. Marqueur selon la revendication 1, le matériau photoluminescent étant agencé pour émettre une lumière visible bleue en réponse à une excitation par une lumière de longueur d'onde comprise entre 400 nm et 500 nm et le matériau photoluminescent ayant une caractéristique de performance telle que l'émissivité est d'au moins 0,3 mcd/m² 12 heures après l'arrêt de la charge à 25 lux pendant 45 minutes.

3. Marqueur pour éclairer une zone d'un aéronef selon la revendication 1, le matériau photoluminescent ayant une caractéristique de performance telle que l'émissivité est d'au moins 0,3 mcd/m² 16 heures après l'arrêt du chargement à 25 lux pendant 45 minutes et éventuellement d'au moins 0,30 mcd/m² après 12 heures, ou plus préférablement après 16 heures, après l'arrêt du chargement à 25 lux pendant 45 minutes.

4. Marqueur selon la revendication 3, l'intensité d'émissivité, 10 minutes après la fin de la charge, étant d'au moins 50 mcd/m² ou, plus préférablement, d'au moins 150 mcd/m² ou, le plus préférablement, d'au moins 300 mcd/m² selon la norme DIN67510.

5. Marqueur selon l'une quelconque des revendications précédentes, le boîtier comprenant un couvercle sur au moins une surface supérieure du matériau photoluminescent et le couvercle étant au moins partiellement transparent à la lumière bleue émise par le matériau photoluminescent et le matériau photoluminescent comprenant un pigment contenant un aluminate de strontium dopé à l'europium et au dysprosium, éventuellement de formule Sr₄Al₁₄O₂₅: Eu, Dy, et éventuellement un ou plusieurs autres pigments phosphorescents, éventuellement au moins
i) le ou chaque pigment supplémentaire étant un aluminate métallique dopé ;
ii) l'aluminate métallique dopé comprenant un dopant choisi dans la liste comprenant :
des ions d'europium ; des ions de dysprosium ; et des ions de néodyme ou tout autre ion de terre rare (lanthanide) ;
iii) le matériau photoluminescent comprenant un mélange du pigment principal et d'un pigment comprenant au moins un des éléments suivants : SrA1₄O₇:Eu,Dy ou CaAl₂O₄:Eu,Nd ; et SrAl₂O₄:Eu,Dy ;
iv) le pigment comprenant de 50 % en poids à 100 % en poids de Sr₄Al₁₄O₂₅:Eu,Dy.

6. Marqueur selon n'importe quelle revendication précédente le matériau photoluminescent étant excité par de la lumière visible ou non visible.

7. Marqueur selon l'une quelconque des revendications précédentes, le matériau photoluminescent ayant un spectre d'émission avec une intensité de crête maximale comprise entre 485 nm et 495 nm et éventuellement sensiblement à 490 nm.

8. Marqueur selon l'une quelconque des revendications précédentes, le pigment comprenant des particules de pigment ayant une plage de tailles et les particules ayant une taille de 1 à 200 microns et, éventuellement, les particules ayant une taille dans la plage de 5 à 90 microns.

9. Marqueur selon l'une quelconque des revendications précédentes comprenant en outre un couvercle prévu sur au moins une surface supérieure du matériau photoluminescent et éventuellement un filtre coloré, et de préférence le couvercle étant au moins partiellement transparent à la lumière bleue émise par le matériau photoluminescent, et éventuellement le couvercle étant au moins partiellement transparent à l'excitation requise pour stimuler l'émission bleue.

10. Marqueur selon la revendication 9, le matériau photoluminescent comprenant une pluralité de pigments, chaque pigment émettant une couleur de lumière différente en réponse à l'excitation, de sorte que la lumière émise par le matériau photoluminescent comprend un mélange de couleurs formant un spectre d'émission ayant une plage de 400 nm à 510 nm.

11. Système de marqueur pour éclairer des zones d'un aéronef, le système comprenant une pluralité de marqueurs selon l'une quelconque des revendications 1 à 10, de préférence le système comprenant des marqueurs comprenant un matériau photoluminescent agencé pour émettre une lumière visible bleue en réponse à une excitation.

12. Système selon la revendication 11, le système comprenant un groupe de premiers marqueurs comprenant éventuellement des marqueurs d'urgence mettant en évidence les emplacements et/ou les itinéraires vers une ou plusieurs sorties de secours d'un aéronef.

13. Système selon la revendication 12, le système comprenant un groupe de seconds marqueurs comprenant des marqueurs de siège.

14. Système selon les revendications 11 à 13, le système étant agencé pour fournir un guide d'évacuation d'urgence et au moins les premiers marqueurs étant formés comme des sections de pistes allongées, et les pistes pouvant être fixées à un plancher un plancher d'une cabine d'avion pour diriger les passagers de leur siège vers l'issue de secours la plus proche.

15. Avion comprenant une cabine de passagers ; et un système de marqueur selon l'une quelconque des revendications 11 à 14.
